# EUROPEAN PATENT SPECIFICATION

(11) **EP 4 119 005 B1**
(45) Date of publication and mention of the grant of the patent: **03.12.2025**
(21) Application number: 22195040.5
(22) Date of filing: 05.06.2017
(51) Int. Cl.: A47B 88/90, A47B 96/20, B29C 65/50

(54) **PRE-MOUNTED FURNITURE MODULE**
VORMONTIERTES MÖBELMODUL
MODULE DE MEUBLE PRÉFABRIQUÉ

(30) Priority: 30.06.2016 SE 1650953
(43) Date of publication of application: 18.01.2023
(62) Divisional of application: 17820637.1
(73) Proprietor: Inter IKEA Systems B.V., 2616 LN Delft (NL)
(72) Inventor: ERIKSSON, Anders, 343 73 Virestad (SE); SJÖSTEDT, Göran, 283 96 Killeberg (SE)
(74) Representative: Ström & Gulliksson AB

(56) References cited:
- DE-A1- 19 804 787
- DE-U1- 20 207 222

## Description

### TECHNICAL FIELD

The present invention relates to a pre-mounted furniture module, such as an erectable structure forming part of a drawer, a box or the like.

### BACKGROUND

It is desired to facilitate the assembly of furniture without negatively affecting handling, packaging and transport of the furniture in a flat and slim package. Today a customer buying a flat packed furniture such as a wardrobe, a cabinet, or a drawer, is required to perform the assembly of such furniture. In order to facilitate the assembly pre-manufacturing of some parts may be done which however also makes the package more bulky. Although pre-manufactured pieces of furniture, or furniture modules forming part of finished pieces of furniture, are easier to assemble into a complete product it would be desirable to provide a pre-mounted furniture module without compromising the handling, packaging or transportation of it. Examples of prior art furniture modules are described in DE19804787 and in DE20207222, both showing pre-manufactured planar back panels.

### SUMMARY

An object of the present invention is to provide an improved pre-mounted furniture module forming part of a piece of furniture, as well as a method for assembling such furniture module. This object is achieved by a solution defined in the appended independent claims; certain embodiment being set forth in the related dependent claims.

In a first aspect, there is provided a furniture module for forming part of a piece of furniture. The furniture module comprises a first panel and at least one second panel being pre-mounted to said first panel by means of an adhesive forming a hinge connection between said first panel and said second panel, wherein a side portion of a panel edge of the first panel is facing a side portion of a panel edge of the second panel when the furniture module is assembled into a final corner shape, and wherein the adhesive is arranged along at least a part of the length of the side portion of the first panel and at least a part of the length of the side portion of the second panel.

A side portion is within this context an edge of a panel, as further explained in the detailed description. In the final shape, which may be a corner shape, the side portions are abutting each other.

The adhesive may be arranged along essentially the entire length of the side portion of said first panel and along essentially the entire length of the side portion of said second panel.

The adhesive may be arranged along only a part of the entire length of the side portion of said first panel and/or said adhesive is arranged only along a part of the entire length of the side portion of said second panel.

The side portion of said first panel may comprise a first surface configured to receive said adhesive and the side portion of said second panel may comprise a first surface configured to receive said adhesive, wherein said first surfaces are adapted to be arranged at an angle of between 10° and 170°, more preferably between 30° and 140°, relative each other in the adhesive receiving state of the furniture module.

The angle may be between 80° and 100°, preferably 90°.

The side portion of said first panel may comprise a second surface being raised with respect to the first surface of said first panel, and the side portion of said second panel may comprise a second surface being raised with respect to the first surface of said second panel.

The first surface of the first panel may be parallel with the second surface of the first panel.

The first surface of the second panel may be parallel with the second surface of the second panel.

The adhesive may be glue, preferably a melt glue, such as a reactive type of melt glue or a thermoplastic melt glue.

A part of the side portion of the second panel may form a stop surface being configured to engage with the first panel thus preventing said hinge connection from further rotation of the second panel relative the first panel.

The second panel may be rotated 270° relative the first panel in order to form a corner shape.

The furniture module may comprise one first panel and two second panels, wherein said two second panels are pre-mounted to a first and a second side portion of said first panel, said first and second side portions being arranged at opposite sides of said first panel.

The first panel may be a bottom piece, and said second panel is a side wall. Optionally, the first panel is a back piece, and the second panel is a side wall.

According to a second aspect, a drawer is provided. The drawer comprises a furniture module according to the first aspect described above.

According to a third aspect a method for assembling a furniture module having a first panel being pre-mounted to a second panel by means of an adhesive forming a hinge connection between said first panel and said second panel is provided. The method comprises unfolding the first panel and the second panel about said hinge connection approximately 270° to form a corner shape, wherein the adhesive is arranged along at least a part of the length of a side portion of a panel edge of the first panel and at least a part of the length of a side portion of a panel edge of the second panel, and wherein the side portions of the first and second panels are facing each other when the furniture module is arranged in the corner shape.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a perspective view of a chest of drawers with a number of drawers according to an embodiment of the invention;
Fig. 2 is a perspective view of a pre-mounted furniture module forming part of a drawer according to an embodiment, in a folded state,
Fig. 3 is a detailed view of a corner of the part of the drawer shown in Fig. 2;
Fig. 4 is a perspective view of a pre-mounted furniture module forming part of a drawer according to an alternative embodiment, in a folded state,
Figs. 5a-e are detailed views of an assembly method of the furniture module shown in Fig. 2;
Fig. 6 is a perspective view of the pre-mounted furniture module forming part of the drawer shown in Fig. 2, here illustrated in an unfolded state;
Fig. 7 is a detailed view of a corner of the furniture module shown in Fig. 6;
Fig. 8 is a perspective view of the pre-mounted furniture module shown in Fig. 4, here illustrated in an unfolded state;
Fig. 9 is a perspective view of a furniture module being manufactured by a method according to an embodiment;
Figs. 10a-c are schematically showing three methods according to different embodiments; and
Fig. 11 and Figs. 12a-d are showing the milling of the first panel and the second panel in cross-sectional views.

### DETAILED DESCRIPTION OF EMBODIMENTS

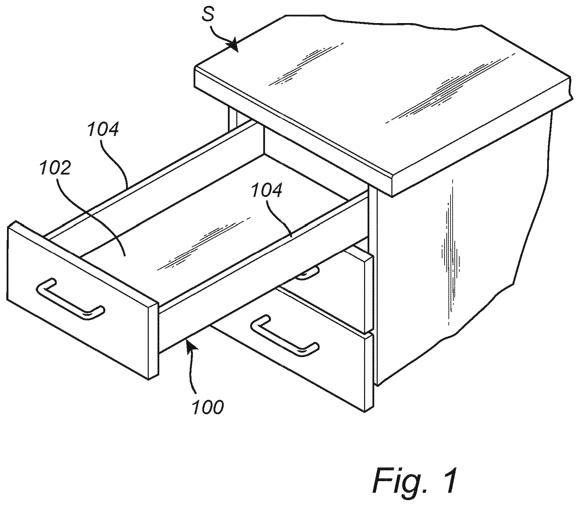

With reference to the drawings there is provided a piece of furniture 100, such as a drawer, a box, a cabinet or the like. The piece of furniture is manufactured at least partly by assembly of a pre-mounted furniture module 100 which will be described in the following. In one embodiment the furniture module 100 forms part of a drawer being slidably supported by means of a chest of drawers S (see Fig. 1). However it should be realized that the furniture module 100 is by no means assumed to be limited to only this application but is instead applicable also for other pieces of furniture such as shelf systems, tables, side boards, etc.

As can be seen in Fig. 1 the furniture module 100 comprises a first panel 102, forming the bottom piece of the drawer, and two panels 104 connected to opposite sides of the bottom piece 102. A front and back piece may also be connected to the furniture module 100 in order to form a complete drawer, as well as guiding rails for enabling a sliding movement of the drawer relative the chest of drawers S.

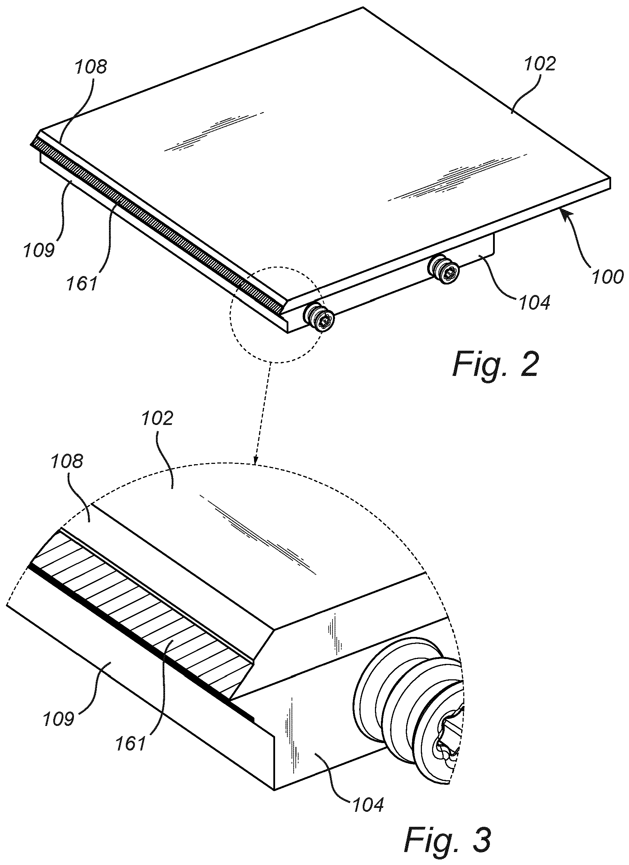

Fig. 2 shows parts of a furniture module 100 with a first panel 102 and a second panel 104 pre-mounted to each other. In Fig. 2 the first and second panels 102, 104 are positioned in a folded state, i.e. a pre-assembly state. The first and second panels 102, 104 are pre-mounted to each other by means of an adhesive 161, preferably in the form of glue, which is arranged along the length of a side portion 108 of the first panel 102 and a side portion 109 of the second panel 104. This is further shown in Fig. 3. The method for applying the adhesive 161 and for producing the pre-mounted furniture module 100 will be described later. The first panel 102 may for example be a bottom piece of a drawer and the second panel 104 may for example be a side wall of the drawer.

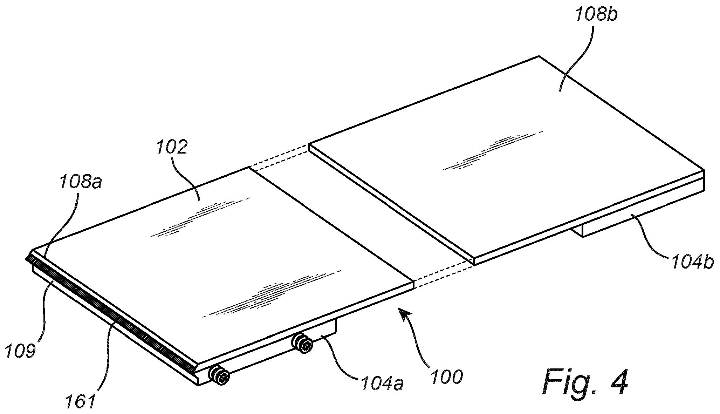

In the embodiment shown in Fig. 4, also showing the folded state, the furniture module 100 has one first panel 102, e.g. forming the bottom piece of a drawer, and two second panels 104a, 104b forming the sidewalls of the drawer. The second panels 104a, 104b are pre-mounted at a respective first and a second side portion 108a, 108b of the first panel 102 respectively. As is shown in Fig. 4 only one second panel 104a is provided with dowels on its lateral edge; however also the other second panel 104b could be equipped with such dowels or other suitable means for allowing connection of additional panels to the second panels 104a, 104b. For example, the dowels may be used to connect a front panel and/or a rear panel to the furniture module 100 such that a drawer, having one bottom piece 102 and four lateral walls, is formed.

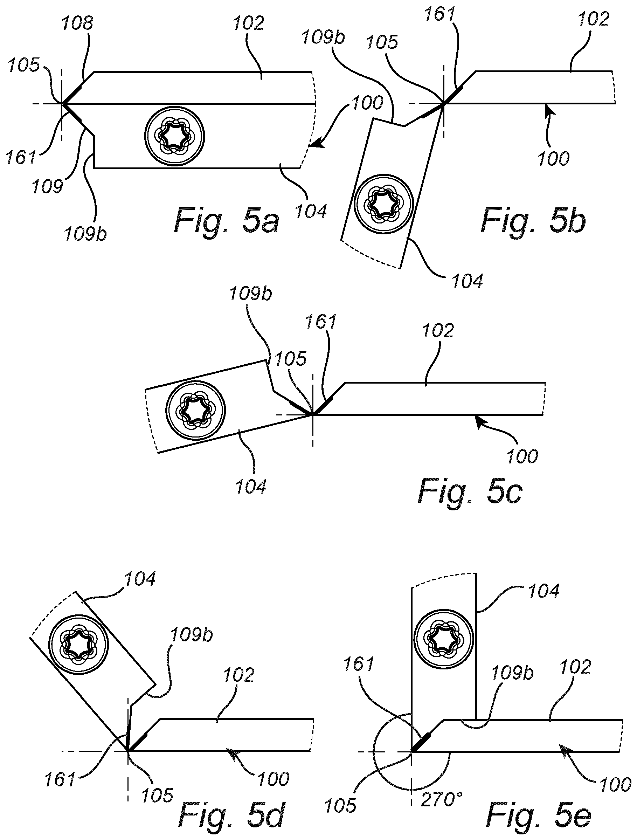

When assembling the furniture module 100 to a corner shape being ready to form part of a piece of furniture, the second panel(s) 104 is rotated relative the first panel 102 from a folded state to an unfolded state, as is shown in Figs. 5a-e. This is enabled due to the adhesive 161 forming a hinge connection 105 between the first and second panel 102, 104.

Initially a user unfolds the first panel 102 relative the second panel 104. The relative rotation between the first panel 102 and the second panel 104 is approximately 270°. As is shown in Fig. 5e the side portion 108 of the first panel 102 and the side portion 109 of the second panel 104 will face each other and meet, abutting each other, when the final corner shape is formed. Additionally, the side portion 109 of the second panel 104 is provided with a stop surface 109b being arranged at 90° relative the general plane in which the second panel 104 extends. This stop surface 109b will prevent the second panel 104 to rotate beyond the desired end position, in this embodiment being 270°. This means that the adhesive 161 is located only on the inside of furniture module 100, i.e. being totally enclosed by the first and second panel 102, 104.

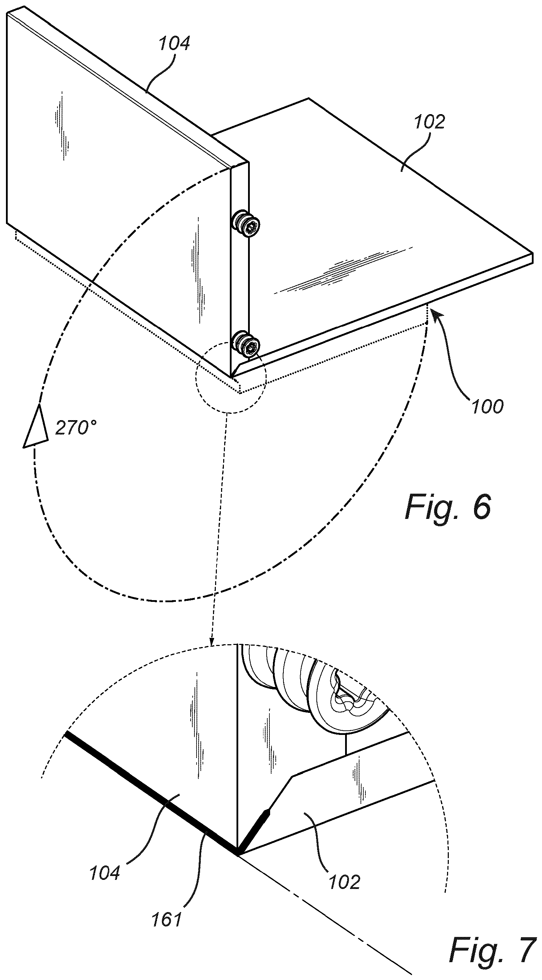

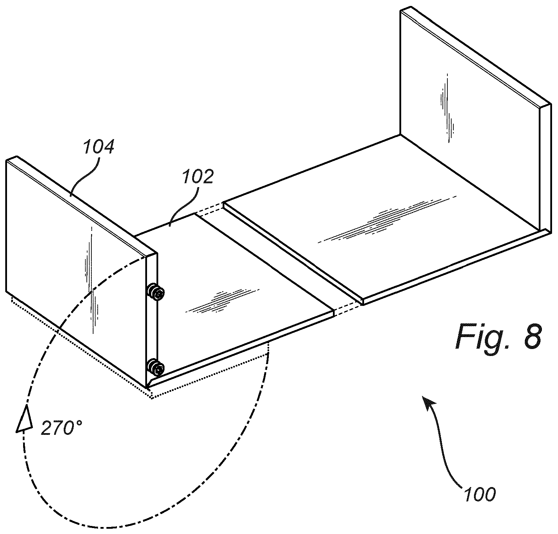

Figs. 6-7 shows the furniture module explained previously with reference to Fig. 2, while Fig. 8 shows the furniture module explained previously with reference to Fig. 4. In these figures the furniture modules are shown in their unfolded states, i.e. after the panels 102, 104 have been unfolded 270° with respect to each other. The adhesive 161 is substantially enclosed by the two panels 102, 104. After the furniture module 100 has been unfolded it may be connected to further panels (not shown), for example a front panel and/or a rear panel.

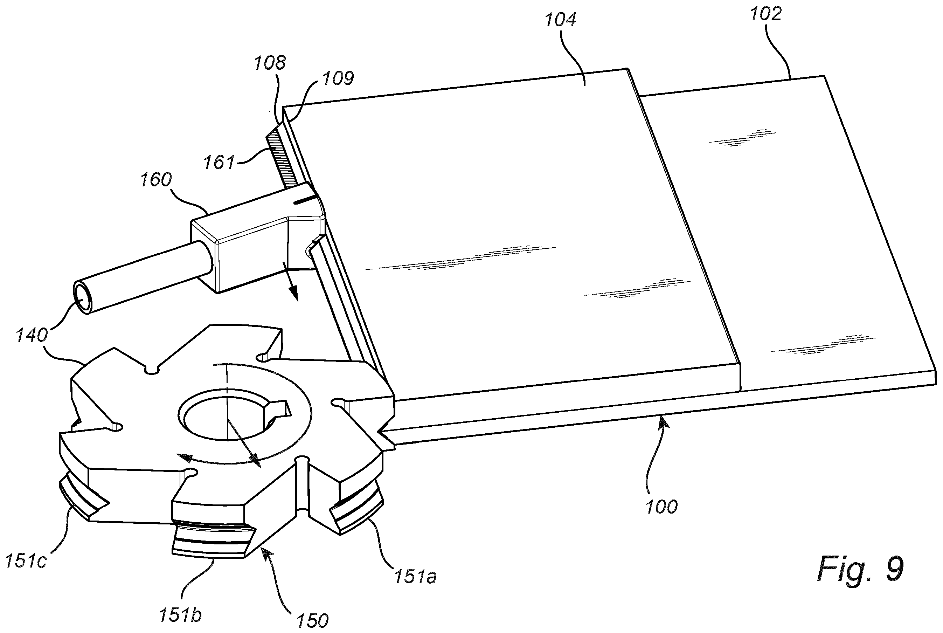

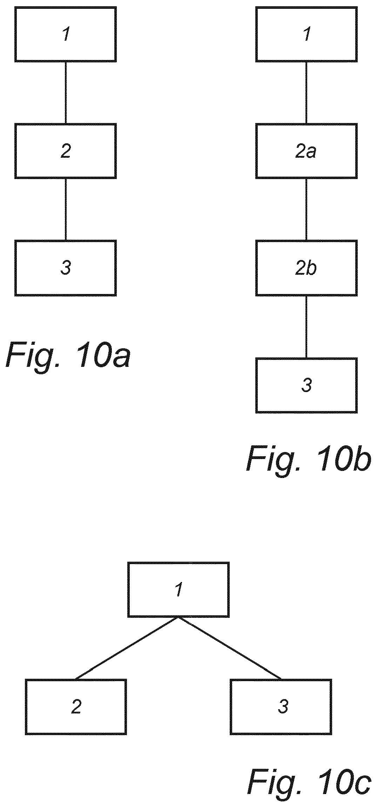

Fig. 9 illustrates an ongoing method for manufacturing the pre-mounted furniture module 100 while Figs. 10a-c schematically illustrate different types of methods. The first panel 102 and a second panel 104 are firstly arranged adjacent to each other such that a side portion 108 of the first panel 102 is substantially flush with a side portion 109 of the second panel 104. The side portion 108 of the first panel 102 and the side portion 109 of the second panel 104 are then milled by means of at least one milling tool 150, preferably a multipoint rotary tool with several milling cutters 151a-c. In the shown embodiment there is only one milling tool 150 having a plurality of milling cutters 151a-c cutting the first panel 102 and the second panel 104 simultaneously. The milling tool 150 is arranged to rotate at a specific speed and at the same time move along the extension of the side portions 108, 109 of the first panel 102 and the second panel 104. The milling tool 150 preferably runs along the entire length of the side portions 108, 109 and the milling cutters 151a-c are provided with respective patterns to cut the side portions 108, 109 in a predetermined way while the milling tool 150 rotates. The milling tool 150 is followed by a joining tool 160 configured to apply the adhesive 161 to the side portions 108, 108 in order to form the hinge connection 105 between the first and second panel 102, 104.

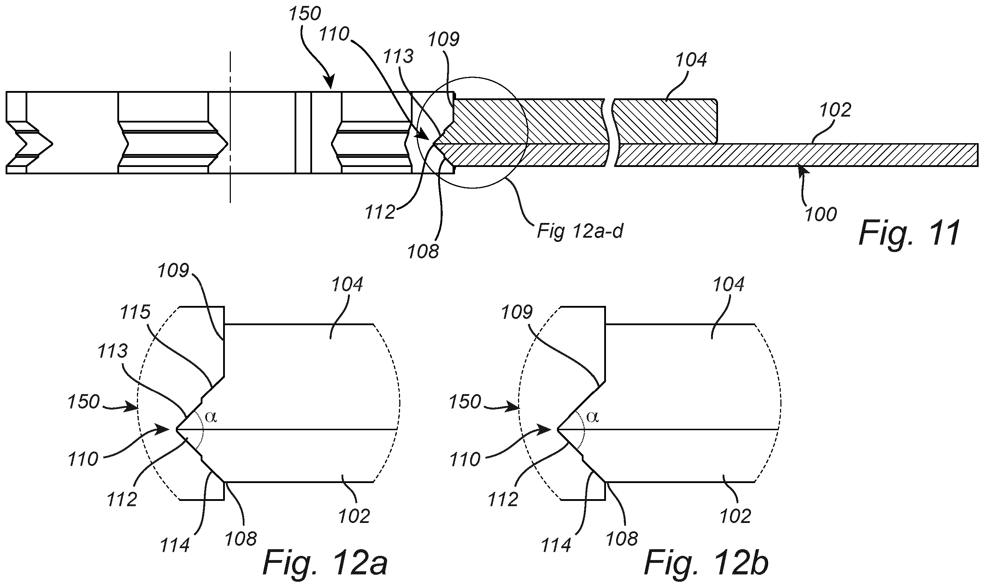

Fig. 11 and Figs. 12a-d illustrate the milling of the first panel 102 and the second panel 104 with different possible cutting patterns.

In an alternative embodiment (not shown) milling of the first panel 102 is made by a first milling tool and milling of the second panel is made by a second milling tool, whereby the milling cutters of the respective milling tools have different cutting patterns.

In yet another alternative embodiment (not shown) milling includes milling the side portion 108 of the first panel 102 with at least a first milling cutter of the milling tool and milling the side portion 109 of the second panel 104 with at least a second milling cutter of the milling tool. The first milling cutter may in such embodiment have a different pattern than the second milling cutter such that they work the first panel 102 and the second panel 104 differently. For a rotary milling tool having a plurality of milling cutters preferably every second milling cutter is configured to work on the first panel 102 and the remaining milling cutters are configured to work on the second panel 104.

The milling tool may be designed in whichever way is suitable or desired. Yet another example is a milling tool which has at least three milling cutters, where a first milling cutter is configured to work the first furniture panel 102 and the second furniture panel 104 in a way different from the second and a third milling cutter, and the second milling cutter is configured to work the first and second furniture panel 102, 104 in a way different from the third milling cutter. The patterns of the milling cutters and their respective positions can be varied.

Figs. 10a-c further shows different types of manufacturing processes for producing a pre-mounted furniture module 100. Fig. 10a describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Fig. 10b describes a process of:
1. arranging the first furniture panel 102 and the second furniture panel 104 adjacent to each other such that the side portion 108 of the first furniture panel 102 is substantially flush with the side portion 109 of the second furniture panel 104;
2a. milling the side portion 108 of the first furniture panel 102 by means of a first milling tool,
2b. milling the side portion 109 of the second furniture panel 104 by means of a second milling tool, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Further, Fig. 10c describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and simultaneously
3. joining the side portion 108 of the first furniture panel 102 to the side portion 109 of the second furniture panel 104 by means of an adhesive 161, where the adhesive creates a hinge connection 105 between the first and second furniture panels 102, 104.

With reference to Fig. 11 and Figs. 12a-d possible results of the milling process are shown. For example, during the milling process a part of the side portion 108 of the first panel 102 around a joining area 110 is cut away creating a surface, called a joining surface 112. At the same time a part of the side portion 109 of the second panel 104, around the joining area 110 are cut away, creating a corresponding surface, also called a joining surface 113. The two joining surfaces 112, 113 are dimensioned such that they can receive an adhesive 161 during the step of joining the first panel 102 and the second panel 104. The joining surface 112 of the first panel 102 and the joining surface 113 of the second panel 104 are arranged at an angle α of between 10° and 170°, preferably at an angle of between 80° and 100° and even more preferably about 90°.

The milling process may further include cutting away another part of the side portions 108, 109 of the first and second panels 102, 104, next to the joining surfaces 112, 113, creating other intermediate surfaces 114, 115. Each intermediate surface 114, 115 is parallel and slightly raised with respect to the adjacent joining surface 112, 113 respectively. Since the intermediate surfaces 114, 115 are slightly raised they form a natural stop for the adhesive 161 as well as a guide which the joining tool 160 can follow when applying the adhesive 161. This is shown in Fig. 12a.

The side portions 108, 109 shown in Fig. 12a may also be provided by a series of milling operations. For example, the side portion 108 of the first panel 102 may be milled in a first operation such that the joining surface 112 and the intermediate surface 114 are formed. In this operation, the side portion 109 of the second panel 104 is preferably left unaffected. This is shown in Fig. 12b.

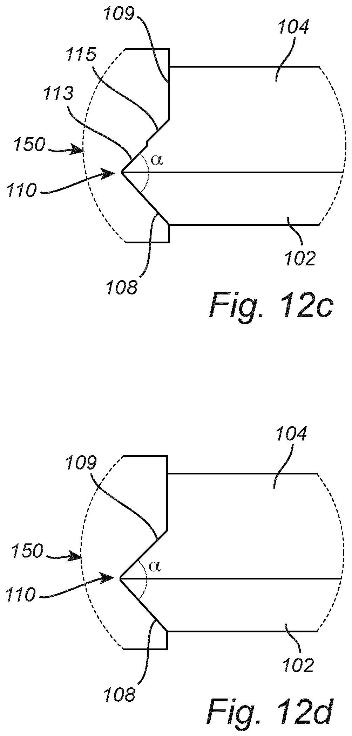

For such embodiment the side portion 109 of the second panel 104 may be milled in a second operation such that the joining surface 113 and the intermediate surface 115 are formed. In this operation, the side portion 108 of the first panel 102 is preferably left unaffected. This is shown in Fig. 12c.

Optionally the operations shown in Figs. 12b and 12c may be preceded by a milling operation in which both the first and second side portions 108, 109 are milled, however only to an extent shown in Fig. 12d. This milling operation does not provide a distinction between the joining surface 112, 113 and the intermediate surface 114, 115.

After the first panel 102 and second panel 104 have been milled they are connected by means of the adhesive 161, preferably in the form of glue. The manufacturing method includes joining the first panel 102 and the second panel 104 by means of the joining tool 160. The joining tool 160 is configured to apply the adhesive 161 at least around the joining area 110 of the side portion 108 of the first panel 102 and the side portion 109 of the second panel 104. Further, the joining tool 160 applies the adhesive 161 substantially along the entire length of the side portions 108, 109 of the first panel 102 and second panel 104.

Although the present invention has been described above with reference to specific embodiments, it is not intended to be limited to the specific form set forth herein. Rather, the invention is limited only by the accompanying claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. A furniture module for forming part of a piece of furniture, comprising a first panel (102) and at least one second panel (104) being pre-mounted to said first panel (102) by means of an adhesive (161) forming a hinge connection (105) between said first panel (102) and said second panel (104), wherein a side portion (108) of a panel edge of the first panel (102) is facing a side portion (109) of a panel edge of the second panel (104) when the furniture module is assembled into a final corner shape, and wherein the adhesive (161) is arranged along at least a part of the length of the side portion (108) of the first panel (102) and at least a part of the length of the side portion (109) of the second panel (104), wherein a part of the side portion (109) of the second panel (104) forms a stop surface (109b) being configured to engage with the first panel (102) thus preventing said hinge connection (105) from further rotation of the second panel (104) relative the first panel (102).

2. The furniture module according to claim 1, wherein the stop surface (109b) is arranged at 90° relative the general plane in which the second panel (104) extends.

3. The furniture module according to claim 1 or 2, wherein the adhesive (161) is located only on the inside of the furniture module (100) when mounted such that the adhesive (161) is totally enclosed by the first and second panel (102, 104).

4. The furniture module according to any of the preceding claims, wherein said adhesive (161) is arranged along essentially the entire length of the side portion (108) of said first panel (102) and along essentially the entire length of the side portion (109) of said second panel (104).

5. The furniture module according to any of claims 1 to 3, wherein said adhesive (161) is arranged along only a part of the entire length of the side portion (108) of said first panel (102) and/or said adhesive (161) is arranged only along a part of the entire length of the side portion (109) of said second panel (104).

6. The furniture module according to claim 4 or 5, wherein the side portion (108) of said first panel (102) comprises a first surface (112) configured to receive said adhesive (161) and the side portion (109) of said second panel (104) comprises a first surface (113) configured to receive said adhesive (161), wherein said first surfaces (112, 113) are adapted to be arranged at an angle (α) of between 10° and 170°, more preferably between 30° and 140°, relative each other in the adhesive receiving state of the furniture module.

7. The furniture module according to claim 6, wherein said angle (α) is between 80° and 100°, preferably 90°.

8. The furniture module according to claim 6 or 7, wherein the side portion (108) of said first panel (102) comprises a second surface (114) being raised with respect to the first surface (112) of said first panel (102), and the side portion (108) of said second panel (104) comprises a second surface (115) being raised with respect to the first surface (113) of said second panel (104), optionally wherein the first surface (112) of the first panel (102) is parallel with the second surface (114) of the first panel (102), optionally wherein the first surface (113) of the second panel (104) is parallel with the second surface (115) of the second panel (104).

9. The furniture module according to any one of the preceding claims, wherein said adhesive (161) is glue.

10. The furniture module according to any one of the preceding claims,
wherein the second panel (104) is rotated 270° relative the first panel (102) in order to form a corner shape.

11. The furniture module according to any one of the preceding claims, comprising one first panel (102) and two second panels (104a, 104b), wherein said two second panels (104a, 104b) are pre-mounted to a first and a second side portion (108a, 108b) of said first panel (102), said first and second side portions (108a, 108b) being arranged at opposite sides of said first panel (102).

12. The furniture module according to any one of the preceding claims,
wherein said first panel (102) is a bottom piece, and said second panel (104) is a side wall.

13. The furniture module according to any one of the claims 1-11, wherein said first panel (102) is a back piece, and said second panel (104) is a side wall.

14. A drawer, comprising a furniture module (100) according to any one of the preceding claims.

15. A method for assembling a furniture module (100) having a first panel (102) being pre-mounted to a second panel (104) by means of an adhesive (161) forming a hinge connection (105) between said first panel (102) and said second panel (104), the method comprising unfolding the first panel (102) and the second panel (104) about said hinge connection (105) approximately 270° to form a corner shape, wherein the adhesive (161) is arranged along at least a part of the length of a side portion (108) of a panel edge of the first panel (102) and at least a part of the length of a side portion (109) of a panel edge of the second panel (104), and wherein the side portions (108, 109) of the first and second panels (102, 104) are facing each other when the furniture module (100) is arranged in the corner shape, wherein a part of the side portion (109) of the second panel (104) forms a stop surface (109b) being configured to engage with the first panel (102) thus preventing said hinge connection (105) from further rotation of the second panel (104) relative the first panel (102).

## Patentansprüche

1. Möbelmodul zum Bilden eines Teils eines Möbelstücks, umfassend eine erste Platte (102) und mindestens eine zweite Platte (104), die mittels eines Klebemittels (161), das eine Scharnierverbindung (105) zwischen besagter erster Platte (102) und besagter zweiter Platte (104) bildet, an der ersten Platte (102) vormontiert ist, wobei ein Seitenabschnitt (108) einer Plattenkante der ersten Platte (102) einem Seitenabschnitt (109) einer Plattenkante der zweiten Platte (104) zugewandt ist, wenn das Möbelmodul in eine endgültige Eckform montiert ist, und wobei das Klebemittel (161) entlang mindestens eines Teils der Länge des Seitenabschnitts (108) der ersten Platte (102) und mindestens eines Teils der Länge des Seitenabschnitts (109) der zweiten Platte (104) angeordnet ist, wobei ein Teil des Seitenabschnitts (109) der zweiten Platte (104) eine Anschlagfläche (109b) bildet, die konfiguriert ist, um mit der ersten Platte (102) in Eingriff zu treten, wodurch besagte Scharnierverbindung (105) an einer weiteren Drehung der zweiten Platte (104) relativ zur ersten Platte (102) gehindert wird.

2. Möbelmodul nach Anspruch 1, wobei die Anschlagfläche (109b) 90° relativ zur allgemeinen Ebene, in der sich die zweite Platte (104) erstreckt, angeordnet ist.

3. Möbelmodul nach Anspruch 1 oder 2, wobei sich das Klebemittel (161) nur auf der Innenseite des Möbelmoduls (100) befindet, wenn es so montiert ist, dass das Klebemittel (161) vollständig von der ersten und zweiten Platte (102, 104) umschlossen ist.

4. Möbelmodul nach einem der vorhergehenden Ansprüche, wobei besagtes Klebemittel (161) entlang im Wesentlichen der gesamten Länge des Seitenabschnitts (108) besagter erster Platte (102) und entlang im Wesentlichen der gesamten Länge des Seitenabschnitts (109) besagter zweiter Platte (104) angeordnet ist.

5. Möbelmodul nach einem der Ansprüche 1 bis 3, wobei besagtes Klebemittel (161) entlang nur eines Teils der gesamten Länge des Seitenabschnitts (108) besagter erster Platte (102) angeordnet ist und/oder besagtes Klebemittel (161) nur entlang eines Teils der gesamten Länge des Seitenabschnitts (109) besagter zweiter Platte (104) angeordnet ist.

6. Möbelmodul nach Anspruch 4 oder 5, wobei der Seitenabschnitt (108) besagter erster Platte (102) eine erste Fläche (112) umfasst, die konfiguriert ist, um besagtes Klebemittel (161) aufzunehmen, und der Seitenabschnitt (109) besagter zweiter Platte (104) eine erste Fläche (113) umfasst, die konfiguriert ist, um besagtes Klebemittel (161) aufzunehmen, wobei besagte erste Flächen (112, 113) gestaltet sind, um in einem Winkel (α) zwischen 10° und 170°, bevorzugter zwischen 30° und 140°, relativ zueinander im Klebemittelaufnahmezustand des Möbelmoduls angeordnet zu sein.

7. Möbelmodul nach Anspruch 6, wobei besagter Winkel (α) zwischen 80° und 100°, bevorzugt 90°, beträgt.

8. Möbelmodul nach Anspruch 6 oder 7, wobei der Seitenabschnitt (108) besagter erster Platte (102) eine zweite Fläche (114) umfasst, die in Bezug auf die erste Fläche (112) besagter erster Platte (102) erhöht ist, und der Seitenabschnitt (108) besagter zweiter Platte (104) eine zweite Fläche (115) umfasst, die in Bezug auf die erste Fläche (113) besagter zweiter Platte (104) erhöht ist, optional wobei die erste Fläche (112) der ersten Platte (102) parallel zur zweiten Fläche (114) der ersten Platte (102) ist, optional wobei die erste Fläche (113) der zweiten Platte (104) parallel zur zweiten Fläche (115) der zweiten Platte (104) ist.

9. Möbelmodul nach einem der vorhergehenden Ansprüche, wobei besagtes Klebemittel (161) Klebstoff ist.

10. Möbelmodul nach einem der vorhergehenden Ansprüche, wobei die zweite Platte (104) um 270° relativ zur ersten Platte (102) gedreht ist, um eine Eckform zu bilden.

11. Möbelmodul nach einem der vorhergehenden Ansprüche, umfassend eine erste Platte (102) und zwei zweite Platten (104a, 104b), wobei besagte zwei zweite Platten (104a, 104b) an einem ersten und einem zweiten Seitenabschnitt (108a, 108b) besagter erster Platte (102) vormontiert sind, wobei besagte erste und zweite Seitenabschnitte (108a, 108b) an gegenüberliegenden Seiten besagter erster Platte (102) angeordnet sind.

12. Möbelmodul nach einem der vorhergehenden Ansprüche, wobei besagte erste Platte (102) ein Bodenstück ist und besagte zweite Platte (104) eine Seitenwand ist.

13. Möbelmodul nach einem der Ansprüche 1-11, wobei besagte erste Platte (102) ein Rückenstück ist und besagte zweite Platte (104) eine Seitenwand ist.

14. Schublade, umfassend ein Möbelmodul (100) nach einem der vorhergehenden Ansprüche.

15. Verfahren zum Montieren eines Möbelmoduls (100) mit einer ersten Platte (102), die an einer zweiten Platte (104) mittels eines Klebemittels (161) vormontiert ist, das eine Scharnierverbindung (105) zwischen besagter erster Platte (102) und besagter zweiter Platte (104) bildet, wobei das Verfahren ein Entfalten der ersten Platte (102) und der zweiten Platte (104) um besagte Scharnierverbindung (105) um ungefähr 270° umfasst, um eine Eckform zu bilden, wobei das Klebemittel (161) entlang mindestens eines Teils der Länge eines Seitenabschnitts (108) einer Plattenkante der ersten Platte (102) und mindestens eines Teils der Länge eines Seitenabschnitts (109) einer Plattenkante der zweiten Platte (104) angeordnet ist, und wobei die Seitenabschnitte (108, 109) der ersten und zweiten Platte (102, 104) einander zugewandt sind, wenn das Möbelmodul (100) in der Eckform angeordnet ist, wobei ein Teil des Seitenabschnitts (109) der zweiten Platte (104) eine Anschlagfläche (109b) bildet, die konfiguriert ist, um mit der ersten Platte (102) in Eingriff zu treten, wodurch besagte Scharnierverbindung (105) an einer weiteren Drehung der zweiten Platte (104) relativ zur ersten Platte (102) gehindert wird.

## Revendications

1. Module de meuble destiné à former une partie d'un meuble, comprenant un premier panneau (102) et au moins un second panneau (104) qui est prémonté sur ledit premier panneau (102) au moyen d'un adhésif (161) formant une liaison articulée (105) entre ledit premier panneau (102) et ledit second panneau (104), dans lequel une partie latérale (108) d'un bord de panneau du premier panneau (102) fait face à une partie latérale (109) d'un bord de panneau du second panneau (104) lorsque le module de meuble est assemblé en une forme de coin finale, et dans lequel l'adhésif (161) est disposé sur au moins une partie de la longueur de la partie latérale (108) du premier panneau (102) et sur au moins une partie de la longueur de la partie latérale (109) du second panneau (104), dans lequel une partie de la partie latérale (109) du second panneau (104) forme une surface de butée (109b) qui est conçue pour coopérer avec le premier panneau (102) empêchant ainsi que ladite liaison articulée (105) ne tourne davantage le second panneau (104) par rapport au premier panneau (102).

2. Module de meuble selon la revendication 1, dans lequel la surface de butée (109b) est disposée à 90° par rapport au plan global dans lequel s'étend le second panneau (104).

3. Module de meuble selon la revendication 1 ou la revendication 2, dans lequel l'adhésif (161) n'est situé que sur l'intérieur du module de meuble (100) lorsqu'il est monté de sorte que l'adhésif (161) soit complètement enfermé par les premier et second panneaux (102, 104).

4. Module de meuble selon l'une quelconque des revendications précédentes, dans lequel ledit adhésif (161) est disposé sensiblement sur toute la longueur de la partie latérale (108) dudit premier panneau (102) et sensiblement sur toute la longueur de la partie latérale (109) dudit second panneau (104).

5. Module de meuble selon l'une quelconque des revendications 1 à 3, dans lequel ledit adhésif (161) n'est disposé que sur une partie de toute la longueur de la partie latérale (108) dudit premier panneau (102) et/ou ledit adhésif (161) n'est disposé que sur une partie de toute la longueur de la partie latérale (109) dudit second panneau (104).

6. Module de meuble selon la revendication 4 ou la revendication 5, dans lequel la partie latérale (108) dudit premier panneau (102) comprend une première surface (112) conçue pour recevoir ledit adhésif (161) et la partie latérale (109) dudit second panneau (104) comprend une première surface (113) conçue pour recevoir ledit adhésif (161), dans lequel lesdites premières surfaces (112, 113) sont conçues pour être disposées à un angle (α) compris entre 10° et 170°, de préférence entre 30° et 140°, l'une par rapport à l'autre dans l'état de réception d'adhésif du module de meuble.

7. Module de meuble selon la revendication 6, dans lequel ledit angle (α) est compris entre 80° et 100°, est de préférence égal à 90°.

8. Module de meuble selon la revendication 6 ou la revendication 7, dans lequel la partie latérale (108) du premier panneau (102) comprend une seconde surface (114) surélevée par rapport à la première surface (112) du premier panneau (102), et la partie latérale (108) du second panneau (104) comprend une seconde surface (115) surélevée par rapport à la première surface (113) du second panneau (104), éventuellement dans lequel la première surface (112) du premier panneau (102) est parallèle à la seconde surface (114) du premier panneau (102), éventuellement dans lequel la première surface (113) du second panneau (104) est parallèle à la seconde surface (115) du second panneau (104).

9. Module de meuble selon l'une quelconque des revendications précédentes, dans lequel ledit adhésif (161) est une colle.

10. Module de meuble selon l'une quelconque des revendications précédentes, dans lequel le second panneau (104) est tourné de 270° par rapport au premier panneau (102) afin de former une forme de coin.

11. Module de meuble selon l'une quelconque des revendications précédentes, comprenant un premier panneau (102) et deux seconds panneaux (104a, 104b), dans lequel lesdits deux seconds panneaux (104a, 104b) sont prémontés sur une première et une seconde partie latérale (108a, 108b) dudit premier panneau (102), lesdites première et seconde parties latérales (108a, 108b) étant disposées au niveau de côtés opposés dudit premier panneau (102).

12. Module de meuble selon l'une quelconque des revendications précédentes, dans lequel ledit premier panneau (102) est un élément de fond, et ledit second panneau (104) est une paroi latérale.

13. Module de meuble selon l'une quelconque des revendications 1 à 11, dans lequel ledit premier panneau (102) est un élément arrière, et ledit second panneau (104) est une paroi latérale.

14. Tiroir, comprenant un module de meuble (100) selon l'une quelconque des revendications précédentes.

15. Procédé d'assemblage d'un module de meuble (100) comportant un premier panneau (102) qui est prémonté sur un second panneau (104) au moyen d'un adhésif (161) formant une liaison articulée (105) entre ledit premier panneau (102) et ledit second panneau (104), le procédé comprenant l'étape consistant à déplier le premier panneau (102) et le second panneau (104) autour de ladite liaison articulée (105) à approximativement 270° pour former une forme de coin, dans lequel l'adhésif (161) est disposé sur au moins une partie de la longueur d'une partie latérale (108) d'un bord de panneau du premier panneau (102) et sur au moins une partie de la longueur d'une partie latérale (109) d'un bord de panneau du second panneau (104), et dans lequel les parties latérales (108, 109) des premier et second panneaux (102, 104) se font face lorsque le module de meuble (100) est disposé selon la forme de coin, dans lequel une partie de la partie latérale (109) du second panneau (104) forme une surface de butée (109b) qui est conçue pour coopérer avec le premier panneau (102) empêchant ainsi que ladite liaison articulée (105) ne tourne davantage le second panneau (104) par rapport au premier panneau (102).
